**Europäisches Patentamt**

(19) **European Patent Office**

**Office européen des brevets**

(11) Numéro de publication: **0 313 420 B1**

(12) # FASCICULE DE BREVET EUROPEEN

(45) Date de publication du fascicule du brevet:
**13.11.91 Bulletin 91/46**

(51) Int. Cl.⁵: **B60J 1/02**, B60J 3/02,
B60R 1/04, B60R 1/12,
B60R 11/02

(21) Numéro de dépôt: **88402264.1**

(22) Date de dépôt: **08.09.88**

(54) **Vitrage pour véhicule automobile.**

(30) Priorité: **10.09.87 DE 3730346**

(43) Date de publication de la demande:
**26.04.89 Bulletin 89/17**

(45) Mention de la délivrance du brevet:
**13.11.91 Bulletin 91/46**

(84) Etats contractants désignés:
**BE DE ES FR GB IT NL SE**

(56) Documents cités:
**FR-A- 735 452**
**FR-A- 2 134 119**
**FR-A- 2 553 352**
**GB-A- 2 134 464**

(73) Titulaire: **SAINT-GOBAIN VITRAGE**
**INTERNATIONAL**
**18, avenue d'Alsace**
**F-92400 Courbevoie (FR)**
(84) Etats contractants désignés:
**BE ES FR GB IT NL SE**
Titulaire: **VEGLA Vereinigte Glaswerke GmbH**
**Viktoriaallee 3-5**
**W-5100 Aachen (DE)**
(84) Etats contractants désignés:
**DE**

(72) Inventeur: **Ohlenforst, Hans**
**Im Johannistal 7**
**W-5100 Aachen (DE)**
Inventeur: **Kunert, Heinz**
**23 Am Krielerdom**
**W-5000 Köln 41 (DE)**

(74) Mandataire: **Eudes, Marcel et al**
**Saint-Gobain Recherche 39 Quai Lucien**
**Lefranc**
**F-93304 Aubervilliers Cedex (FR)**

## Description

L'invention se rapporte à la construction et à l'aménagement de l'habitacle d'un véhicule automobile.

A l'intérieur de l'habitacle d'un véhicule sont en général disposés, à portée du siège du conducteur ou du passager voisin, différents organes fonctionnels qui peuvent être commandés manuellement par l'un ou l'autre, tels que des pare-soleil réglables ou des commutateurs lumineux pour l'éclairage intérieur, ou des organes qui fournissent des informations au conducteur ou à son voisin, tels que haut-parleurs, montre de bord, miroir, etc... Pour que ces organes remplissent leur fonction, ils doivent être placés à proximité du conducteur ou du siège voisin, en un endroit tel qu'ils puissent être exploités.

Certains de ces organes sont généralement placés à l'intérieur ou sur le tableau de bord, d'autres au contraire, en particulier les pare-soleil ou l'éclairage intérieur, sont placés sur le châssis du véhicule, au-dessus du pare-brise. Les organes placés sur le châssis du véhicule sont fixés individuellement, lors du montage final sur la carrosserie, dans des ouvertures prévues à cette fin.

L'invention a pour objet de simplifier la construction de l'habitacle d'un véhicule automobile et de fournir une solution apte à raccourcir les temps de montage, lors du montage final du véhicule.

A cette fin, l'invention propose, sous une forme unitaire, un vitrage destiné à être monté sur la carrosserie d'un véhicule, en particulier un pare-brise en verre feuilleté de sécurité, comportant, fixé préalablement à son montage sur cette carrosserie, sur sa face à tourner vers l'habitacle et le long de son bord supérieur, un tableau s'étendant de préférence substantiellement sur toute sa largeur et formant support et/ou boîtier pour différents organes fonctionnels.

Sur ce tableau peuvent être placés les organes les plus divers, en particulier les pare-soleil, les rétroviseurs, les lampes d'éclairage intérieur, avec leurs interrupteurs, une montre de bord et des haut-parleurs.

Dans un développement avantageux de l'invention, le tableau peut être raccordé, par une buse de raccordement correspondante, au système de chauffage et d'aération du véhicule, et pourvu de buses de soufflage appropriées. Les buses de soufflage peuvent être dirigées vers le champ de vision du pare-brise et servir à accélérer la disparition de la buée sur le vitrage. Le cas échéant, des buses auxiliaires peuvent aussi être placées sur la face supérieure du tableau, buses dont le courant d'air sera dirigé vers le toit du véhicule et améliorera la circulation de l'air dans l'habitacle, contribuant à améliorer le confort.

Le tableau muni des organes prévus dans chaque cas sera avantageusement fixé sur le vitrage, en tant que pièce montée à l'avance, avant la pose du vitrage sur la carrosserie. Les raccordements correspondant au système de fourniture de courant et le cas échéant au système de ventilation devront seuls être exécutés. Les gaines nécessaires pour le raccordement sont bien entendu à prévoir à l'emplacement voulu dans la carrosserie du véhicule, par exemple le long ou à l'intérieur des montants A du véhicule.

L'utilisation d'un tel tableau pré-monté permet au fabricant automobile d'économiser sur les travaux de préparation et de montage sur la carrosserie et l'équipement intérieur. Les estampages autrefois nécessaires dans les tôles et l'insertion de boulons pour la fixation des pare-soleil, de différentes poignées ou de la lumière intérieure sont supprimés. Lors des remontages sur le véhicule qui doivent être accomplis sur la chaîne de montage, toute une série de travaux de montage disparaissent, comme le montage des pare-soleil, la pose de l'éclairage intérieur, de la montre, des haut-parleurs et de différents commutateurs, c'est-à-dire de toutes les pièces qui sont déjà montées sur le tableau et qui par conséquent n'ont pas à être introduites sur la chaîne de montage en tant que pièces isolées.

De façon avantageuse, la fixation du tableau pré-équipé sur le vitrage recourt à des organes de fixation métalliques collés sur le vitrage par son fabricant et sur lesquels le tableau est fixé, d'une façon appropriée, peu avant la pose du vitrage sur la carrosserie automobile.

La fixation peut se faire par vis ou par d'autres moyens usuels comme des clips ou des fixations à emboîtement.

Le vitrage lui-même est constitué de verre feuilleté qui conserve encore une cohésion notable lorsque l'une des feuilles de verre est brisée, de sorte que le tableau demeure fixé de façon sûre, même après rupture du vitrage.

En première ligne, l'invention vise réellement le domaine du pare-brise, mais il est tout à fait possible de munir la lunette arrière ou les vitres latérales d'un tableau de ce genre qui sera alors équipé d'organes d'un autre type.

Un exemple de mise en oeuvre de l'invention est représenté par les dessins et sera décrit en détail ci-dessous. Ces dessins montrent :

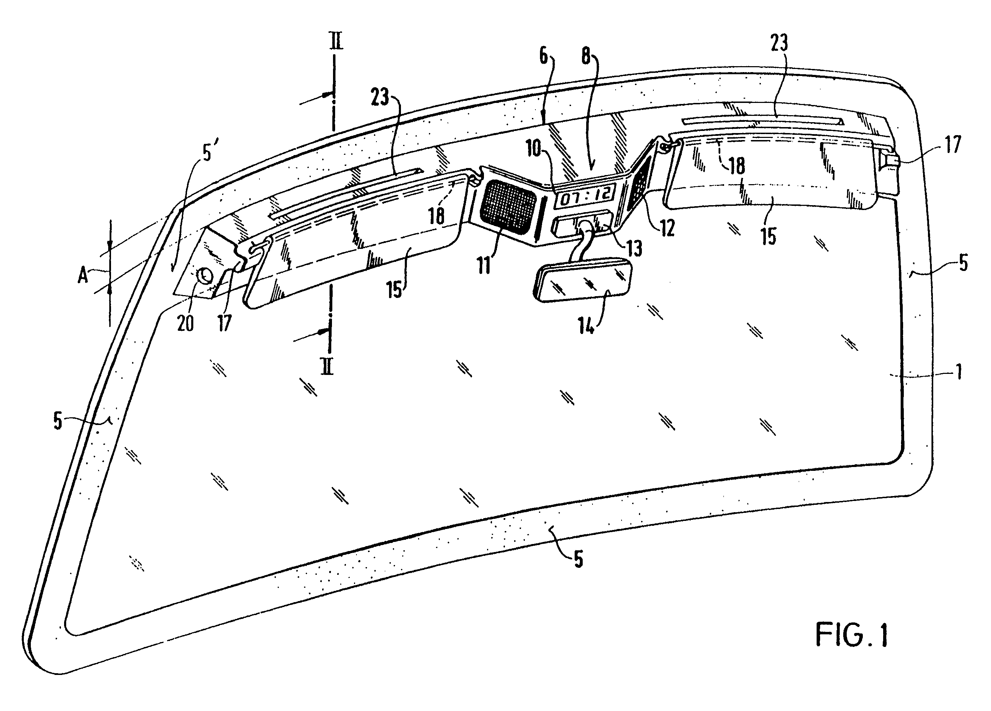

— fig. 1 : la vue d'ensemble d'un vitrage muni d'un tableau pré-monté selon l'invention, et

— fig. 2 : une vue en coupe verticale le long de la ligne II-II de la figure 1.

Le vitrage 1 est constitué d'un panneau de verre feuilleté, et comprend deux feuilles de verre de silicate 2, 3 collées l'une à l'autre, à l'aide d'une feuille intercalaire thermoplasplastique 4, sur l'ensemble de leur surface.

Le long de son bord, le vitrage 1 est muni d'un dépôt opaque 5 formant cadre. Le revêtement opaque 5 est constitué d'une couche d'émail de couleur, cuite à la surface du verre au cours du traitement thermique qui conduit au bombage de la feuille de verre. Le long du bord supérieur du vitrage, en 5', le dépôt est assez large pour masquer le tableau 6, en vue directe depuis l'extérieur.

Le tableau 6 est fixé sur la face interne du vitrage 1 le long de son bord supérieur en maintenant un écartement A par rapport au chant du vitrage. L'écartement A est mesuré de telle sorte que le vitrage 1 et le tableau 6 puissent être montés dans le cadre de la fenêtre de la carrosserie.

Le tableau 6 s'étend substantiellement sur toute la largeur du vitrage 1.

Le tableau 6 est monobloc et constitué d'un corps creux en matière plastique, fabriqué par un procédé connu de pressage ou d'emboutissage profond.

Le tableau fabriqué à la presse ou par emboutissage profond est pourvu de toutes les ouvertures et renforts nécessaires pour le montage des différents organes à sa surface ou à l'intérieur.

Le tableau 6 apparaît, dans le cas représenté, sous une forme allongée, et il présente en son milieu un volume saillant 8 dirigé vers l'intérieur de l'habitacle. Dans l'espace ainsi constitué peuvent être placés différents organes comme par exemple une montre digitale 10 et deux haut-parleurs 11 et 12. Sur le volume saillant 8 du tableau est aussi monté un support 13 qui reçoit le rétroviseur 14.

Sur les deux parties latérales du tableau 6, de part et d'autre de la partie saillante 8, sont fixés les deux pare-soleil 15, la pièce pivot 17 de l'axe de maintien 18 du pare-soleil 15 étant elle-même formée directement sur le tableau 6.

Sur son côté, le tableau 6 est muni d'une ouverture 20 pour le raccordement d'un système de ventilation du véhicule. Cette ouverture 20 se trouve en relation avec les gaines ou les évidements par lesquels l'air est amené aux buses en forme de fente 22 et 23. Les buses 22 sont dirigées vers le vitrage 1 et les buses 23 vers le toit du véhicule.

Le cas échéant, des registres et/ou des volets appropriés peuvent être montés dans le tableau 6, au moyen desquels l'amenée d'air et/ou la direction du courant d'air qui sort des buses pourront être réglées.

La fixation du tableau 6 sur la surface du verre se fait par des clips. Dans ce but, des pièces de maintien 25 sont fixées sur la surface de la feuille de verre, sur la couche opaque 5', réparties sur la largeur de la feuille de verre, et ceci à l'aide de couches de colle appropriées 26. Pour obtenir une particulièrement bonne fixation des éléments de maintien 25 sur la couche de colle 26, lesdits éléments 25 sont pourvus de trous 27 à travers lesquels déborde la masse de colle 26. Les éléments de maintien 25 présentent sur chacune de leurs extrémités, supérieure et inférieure, une pièce en saillie crantée 28 qui coopère avec une pièce en saillie crantée 29 placée sur la surface interne du tableau 6.

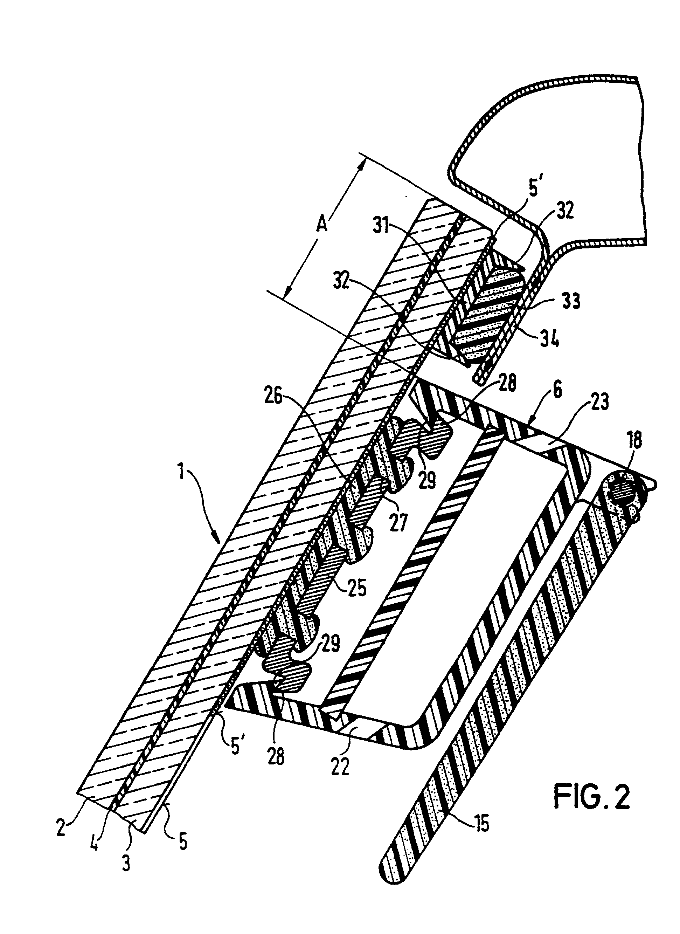

Les éléments de maintien 25 sont avantageusement collés sur la feuille de verre 1 à l'atelier de fabrication des vitrages. De même, les feuilles de verre 1 peuvent, comme on le voit sur la figure 2, être pourvues dans cet atelier d'un profilé 31, qui présente en section transversale deux ailes 32 s'amincissant en coin. Les ailes 32 servent à délimiter la couche de colle 33 avec laquelle le vitrage 1 est collé sur le rebord de fixation 34 de la carrosserie.

## Revendications

1. Vitrage de véhicule, en particulier pare-brise en verre feuilleté de sécurité, **caractérisé en ce qu'il** comporte, fixé préalablement à son montage sur la carrosserie du véhicule, sur sa face à tourner vers l'habitacle et le long de son bord supérieur, un tableau (6) formant support et/ou boîtier pour différents organes fonctionnels.

2. Vitrage selon la revendication 1, **caractérisé en ce que** le tableau (6) s'étend substantiellement sur toute la largeur du vitrage.

3. Vitrage selon une des revendications 1 ou 2, **caractérisé en ce que** des éléments de maintien (25) métalliques sont collés au vitrage 1, sur lesquels le tableau (6) est fixé de façon amovible.

4. Vitrage selon une des revendications 1 à 3, **caractérisé en ce que** le vitrage (1) est muni, dans le domaine destiné à recevoir le tableau (6), d'une couche opaque (5').

5. Vitrage selon l'une ou plusieurs des revendications 1 à 4, **caractérisé en ce que** sur le tableau (6) sont disposés, dans leur position, des pare-soleil réglables (15).

6. Vitrage selon l'une au moins des revendications 1 à 5, **caractérisé en ce que** sur le tableau (6) est disposé le rétroviseur intérieur (14) du véhicule.

7. Vitrage selon l'une au moins des revendications 1 à 6, **caractérisé en ce que** sur le tableau (6) est fixé la lampe et/ou l'interrupteur de l'éclairage intérieur.

8. Vitrage selon l'une au moins des revendications 1 à 7, **caractérisé en ce que** des haut-parleurs (11, 12') sont placés dans le tableau (6).

9. Vitrage selon l'une au moins des revendications 1 à 8, **caractérisé en ce que** dans le tableau (6) est disposée une montre 10.

10. Vitrage selon l'une au moins des revendications 1 à 9, **caractérisé en ce que** le tableau (6) présente une buse de raccordement (20) au système de chauffage ou de ventilation, ainsi que des buses de soufflage (22, 23), qui sont dirigées vers le vitrage et/ou vers le toit du véhicule.

11. Vitrage selon l'une au moins des revendications 1 à 10, **caractérisé en ce que** différents organes sont montés à l'avance dans le tableau (6).

12. Vitrage pour la fixation d'un tableau selon l'une au moins des revendications 1 à 11, **caractérisé**

en ce qu'un profilé métallique de fixation ou une pluralité d'éléments métalliques de fixation (25) sont collés à la feuille de verre (1).


**Patentansprüche**

1. Glasscheibe für ein Kraftfahrzeug, insbesondere Windschutzscheibe aus Verbundsicherheitsglas, **dadurch gekennzeichnet**, daß sie auf der dem Fahrgastraum zugewandten Seite entlang ihrem oberen Randbereich mit einem vor ihrer Montage in der Fahrzeugkarosserie auf der Glasscheibe befestigten Formkörper (6) versehen ist, der einen Träger und-/oder ein Gehäuse für verschiedene Funktionsteile bildet.

2. Glasscheibe nach Anspruch 1, dadurch gekennzeichnet, daß der Formkörper (6) sich im wesentlichen über die ganze Breite der Glasscheibe erstreckt.

3. Glasscheibe nach Anspruch 1 oder 2, dadurch gekennzeichnet, daß mit der Glasscheibe (1) metallische Halteelemente (25) verklebt sind, an denen der Formkörper (6) lösbar befestigt ist.

4. Glasscheibe nach einem der Ansprüche 1 bis 3, dadurch gekennzeichnet, daß die Glasscheibe (1) in dem für die Anordnung des Formkörpers (6) bestimmten Bereich mit einer lichtundurchlässigen Schicht (5') versehen ist.

5. Glasscheibe nach einem oder mehreren der Ansprüche 1 bis 4, dadurch gekennzeichnet, daß an dem Formkörper (6) in ihrer Position verstellbare Sonnenblenden (15) angeordnet sind.

6. Glasscheibe nach wenigstens einem der Ansprüche 1 bis 5, dadurch gekennzeichnet, daß an dem Fowmkörper (6) der Innen-Rückblickspiegel (14) des Fahrzeugs angeordnet ist.

7. Glasscheibe nach wenigstens einem der Ansprüche 1 bis 6, dadurch gekennzeichnet, daß an dem Formkörper (6) die Lampe und/oder der Schalter für die Innenbeleuchtung angeordnet ist.

8. Glasscheibe nach wenigstens einem der Ansprüche 1 bis 7, dadurch gekennzeichnet, daß in dem Formkörper (6) Lautsprecher (11, 12') angeordnet sind.

9. Glasscheibe nach wenigstens einem der Ansprüche 1 bis 8, dadurch gekennzeichnet, daß in derm Formkörper (6) eine Zeituhr (10) angeordnet ist.

10. Glasscheibe nach wenigstens einem der Ansprüche 1 bis 9, dadurch gekennzeichnet, daß der Formkörper (6) einen Anschlußstutzen (20) für das Heizungs- oder Lüftungssystem sowie Luftaustrittsdüsen (22, 23) aufweist, die auf die Windschutzscheibe und/oder gegen den Fahrzeughimmel gerichtet sind.

11. Glasscheibe nach wenigstens einem der Ansprüche 1 bis 10, dadurch gekennzeichnet, daß verschiedene Teile in dem Formkörper (6) vormontiert sind.

12. Glasscheibe für die Befestigung eines Formkörpers nach wenigstens einem der Ansprüche 1 bis 11, dadurch gekennzeichnet, daß ein metallisches Befestigungsprofil oder eine Anzahl von metallischen Befestigungselementen (25) mit der Glasscheibe (1) verklebt sind.


**Claims**

1. Window pane for vehicle, especially windscreen of laminated safety glass, characterized in that it possesses, fixed to its face towards the passenger compartment and along its upper edge, before the installation of the windscreen on the vehicle body, a panel (6) forming a support and/or housing for various functional elements.

2. Pane according to Claim 1, characterized in that the panel (6) extends substantially over the entire width of the pane.

3. Pane according to one of Claims 1 or 2, characterized in that metal support elements (25) are glued to the pane (1), to which elements the panel (6) is fixed in removable manner.

4. Pane according to one of Claims 1 to 3, characterized in that the pane (1) is equipped, in the area intended for receiving the panel (6), with an opaque film (5').

5. Pane according to one or more of Claims 1 to 4, characterized in that sunshields (15), adjustable in their position, are disposed on the panel (6).

6. Pane according to at least one of Claims 1 to 5, characterized in that the internal rearview mirror (14) of the vehicle is disposed on the panel (6).

7. Pane according to at least one of Claims 1 to 6, characterized in that the interior lamp and/or the light switch are fixed to the panel (6).

8. Pane according to at least one of Claims 1 to 7, characterized in that loudspeakers (11, 12') are placed in the panel (6).

9. Pane according to at least one of Claims 1 to 8, characterized in that a clock (10) is disposed in the panel (6).

10. Pane according to at least one of Claims 1 to 9, characterized in that the panel (6) has a connecting nozzle (20) for connection to the heating or ventilation system, and also blowing nozzles (22, 23) which are directed towards the pane and/or towards the roof of the vehicle.

11. Pane according to at least one of Claims 1 to 10, characterized in that different elements are previously mounted in the panel (6).

12. Pane for fixing a panel according to at least one of Claims 1 to 11, characterized in that a metal fixing profile or a plurality of metal fixing elements (25) are glued to the glass sheet (1).

FIG. 1

FIG.2